# EUROPEAN PATENT SPECIFICATION

(11) **EP 1 178 255 B1**
(45) Date of publication and mention of the grant of the patent: **07.06.2006**
(21) Application number: 01305497.8
(22) Date of filing: 25.06.2001
(51) Int. Cl.: F16L 37/084

(54) **Tube coupling**
Rohrverbindung
Raccord de tuyau

(30) Priority: 28.06.2000 GB 0015867
(43) Date of publication of application: 06.02.2002
(73) Proprietor: Pegler Limited, Doncaster, South Yorkshire DN4 8DF (GB)
(72) Inventor: Bramhald, Philip David, Bessacarr, Doncaster DN4 7AF (GB); Wright, Michael Jonathan, Finningley, Doncaster DN9 3NZ (GB)
(74) Representative: Coleiro, Raymond

(56) References cited:
- EP-A- 1 039 204
- WO-A-97/03314
- GB-A- 2 160 279
- US-A- 4 593 943
- US-A- 5 320 326
- US-A- 5 437 483
- PATENT ABSTRACTS OF JAPAN & JP 11 270761 A (USUI INTERNATL IND CO LTG), 5 October 1999 (1999-10-05)

## Description

The present invention relates to tube couplings, and particularly but not exclusively to releaseable push-fit tube couplings used for example in plumbing systems for connecting together water pipes.

Examples of push-fit tube coupling are known from WO 97/03314 and GB-A-2 306 131. These tube couplings include an axially slidable gripping element which fits around a tube within the coupling, the gripping element comprising an annular member which has a plurality of inclined tube gripping teeth which project into the tube coupling. In use, the internal pressure of the fluid in the tube causes the tube and the attached gripping element to be forced out of the tube coupling. Preventing this is a tapered cam arrangement at the entrance of the tube receiving bore such that as the fluid pressure tries to force the tube and gripping element out of the tube coupling, portions of the gripping element are urged against the tapered cam surface which increases the pressure exerted by the tube gripping teeth of the gripping element against the tube. This increases the grip on the tube to prevent its further withdrawal.

The tube may be released from the coupling by pushing the gripping element back into the coupling, away from the tapered cam surface, and maintaining it in that position, thereby reducing the grip of the tube gripping teeth on the tube and enabling the tube to be pulled out.

This type of arrangement where the tube gripping element moves axially within the tube coupling has a number of disadvantages associated with it. Firstly, it is more difficult to manufacture the coupling since the portion of the body housing the axially slidable tube gripping means needs to be of a greater diameter than the tapered cam surface at the entrance of the tube receiving bore. This requires expensive tooling and increases overall production costs. Alternatively, the tapered cam surface needs to be somehow affixed to the coupling at the entrance of the bore, which again leads to manufacturing, or at least assembly difficulties. Secondly, the ability of the tube gripping means to axially slide within the coupling and the interactions between the tube gripping means and the tapered cam surface can lead to wear of these components, necessitating disassembly of the tube from the coupling to enable replacement of the worn parts to take place. Thirdly, if it is desired to replace or service the O-ring seal within the coupling, it is disadvantageous that the tube gripping means cannot easily be removed to facilitate this. Thus, if it is desired to replace the O-ring seal, it is necessary to remove this and insert the new seal with both the tube gripping means and the tapered cam surface in place.

It is also known to provide push-fit tube couplings with an integral one-piece release means. Examples of this type of push-fit coupling are provided in GB-A-2 146 400 US 4,593,943 on which is based the preamble of claim 1, US 5,437,483 and WO 97/03314. However, these couplings are necessarily quite bulky, since the release means projects outside of the housing. Additionally, it is possible for the release means accidentally to be activated and thus permit undesired removal of the tube from the coupling.

In an attempt to overcome the problem of accidental operation of the release means, it is known to provide a detachable one-piece release member which is engageable with certain types of push-fit tube couplings. An example of this is known from WO 96/13685. However, it is often difficult to exert the necessary force to release the tube from the coupling using such detachable one-piece release members.

It is an aim of the present invention to overcome or at lease ameliorate at least some of the problems associated with the known types of push-fit tube couplings.

Thus, according to a first aspect of the present invention there is provided a tube coupling apparatus as defined in claim 1. Preferably, the retaining element also retains at least a portion of the release element within the bore.

In a preferred embodiment, the release element includes a projecting portion which extends outside of the body. This projecting portion may be engaged by a release tool whereby the release element may be brought into engagement with the tube gripping means so as to urge the tube engaging teeth out of gripping engagement with the tube. This preferred arrangement of the release element means that the release tool does not need to have a shim portion capable of entering the bore between the body and the tube in order to engage the release element.

The retaining element preferably snap-fits within the bore, more preferably at least a portion of it snap-fits into a radially outwardly extending groove or channel in the body.

Once the retaining element has been snap-fitted in the coupling apparatus, it acts as a stop for the tube gripping means thereby preventing axial movement of the gripping means towards the open end of the bore. This in turn prevents axial movement of a tube, when retained within the coupling, towards the open end of the bore thereby preventing undesired or accidental withdrawal of the tube from the coupling.

The tube coupling apparatus may further include a stiffening element which cooperates with the tube gripping means by engaging a portion of the tube gripping means thereby preventing radially inward movement of that portion. This preferred arrangement renders the tube gripping means stiffer and increases the gripping force which can be exerted by the tube engaging teeth to the tube.

The stiffening element, in preventing radially inward movement of a portion of the tube gripping means, retains the tube gripping means in a central position with respect to the tube receiving bore. By retaining the tube gripping means centrally, insertion of a tube into the coupling is made easier. Additionally, the stiffening element may be located between the sealing element and the tube gripping means, thus preventing the sealing element being damaged by the tube gripping means.

Each of the tube engaging teeth preferably includes an indented portion to engage in a more effective manner the curved periphery of the tube. The indented portion is preferably located substantially at the mid-point of the engagement surface of each of the teeth. In a preferred embodiment each of the teeth includes an engagement surface comprising an indented central portion and a convex outer portion on either side of the central portion.

The retaining element cooperates with the release element to limit the axial movement of the release element within the bore. This may be achieved by providing the retaining element with an annular slot having opposed stop surfaces and providing the release element with a protrusion which is located within the slot such that axial movement of the release element is constrained by the opposed stop surfaces. This is achieved by the stop surfaces being capable of contacting the release element protrusion.

According to a second aspect of the present invention there is provided a tube release apparatus according to Claim 17.

The second release member preferably includes a slot to permit it to be located coaxially with the tube.

In a preferred embodiment, the second release member includes a radially inwardly extending flange which is engageable with a complimentary shaped and sized radially outwardly extending flange provided on the body of the tube coupling apparatus thereby to prevent axial movement of the second release member towards the opening of the tube receiving bore upon operation of the tube release apparatus.

As will be appreciated, the first and second release members are usually brought out of threaded engagement with other and separated prior to engagement with the tube coupling apparatus and are then brought into threaded engagement one with the other in order to achieve the release of the tube from the tube coupling apparatus. The two release members may be connected one to the other in some suitable way, when they are not in threaded engagement with one another, to prevent one of the two members being lost.

According to a third aspect of the present invention, there is provided a method of releasing a tube from a tube coupling apparatus according to the first aspect of the present invention using a tube release apparatus according to the second aspect of the present invention, the method including locating the first release member coaxially with the bore of the tube coupling apparatus, locating the second release member coaxially with the tube, threadedly engaging the first release member with the second release member, rotating one of the release members with respect to the other release member until the contact surface of the first release member engages the release element of the tube coupling apparatus, continuing to rotate one of the release members with respect to the other thereby causing the release element to engage the tube gripping means so as to urge the tube engaging teeth out of gripping engagement with the tube, and removing the tube from the tube coupling apparatus.

Embodiments of the present invention will now be described by way of example only with reference to the accompanying drawings in which:-
Figure 1 is a sectional view through a tube coupling in accordance with the present invention;
Figure 2 is an end view of the tube gripping means used in the coupling;
Figure 2a is an enlarged view of one of the teeth of the tube gripping means;
Figure 2b is a side elevational view of the tube gripping means;
Figure 3 is an end view of the retaining element used in the tube coupling;
Figure 3a is a side elevational view of the retaining element;
Figure 4 is a sectional view through the stiffening element used in the coupling;
Figure 5 is a sectional view through an alternative tube coupling;
Figure 6 is a sectional view through a first release member of the tube release apparatus according to the second aspect of the invention;
Figure 6a is an end view of the first release member;
Figure 7 is a sectional view through the second release member of the tube release apparatus according to the first aspect of the present invention;
Figure 7a is an end view of the second release member; and
Figure 8 is a sectional view through a tube coupling according to the first aspect of the invention having attached thereto a tube release apparatus according to the second aspect of the present invention.

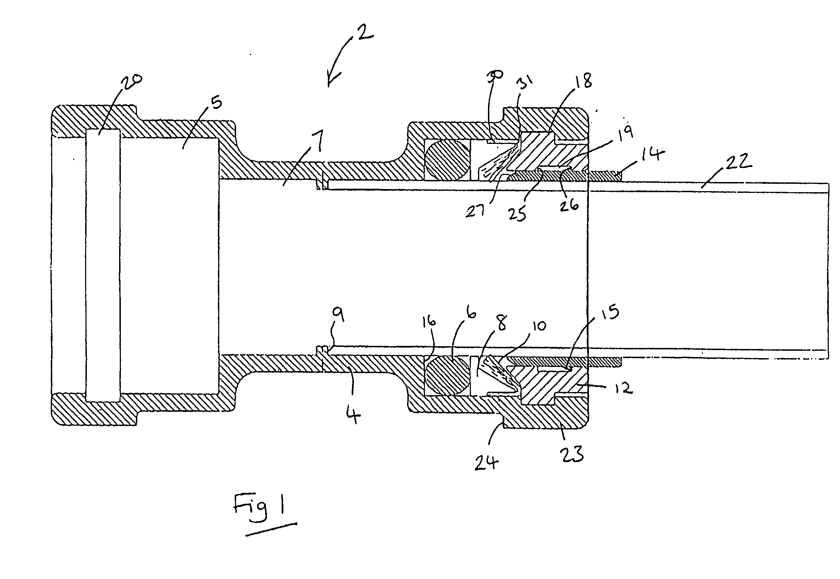

Figure 1 shows an example of a tube coupling in accordance with the first aspect of the present invention. The tube coupling 2 comprises a hollow main body 4 which is substantially tubular in cross-section, has tube receiving bores at each end and has enlarged end regions 5 inter connected by a middle portion 7 of smaller diameter. The hollow main body 4 is made of brass and is used to join together two copper pipes, of which only one (tube 22) is shown in Figure 1.

Each enlarged end region 5 is provided with an O-ring seal 6, a stiffening element 8, a tube gripping ring 10, a release element 14 and a retaining element 12. For clarity, the tube coupling shown in Figure 1 only includes the tube coupling components in one end region thereof, the other end region being shown empty of these components. In use, both end regions will contain substantially identical components.

As can be seen in Figure 1, the O-ring seal 6 is prevented from moving axially towards the centre of the coupling 2 by a stop surface 16 and all of the components housed with the enlarged end region 5 are restrained against axial movement out of the coupling by the retaining element 12.

The retaining element 12 is made from acetal and includes a radially outwardly extending flange 18 which snap-fits into a complimentary groove 20 formed in the enlarged end region 5.

The retaining element 12 includes a groove 19 having a first stop surface 25 and a second stop surface 26. Within the groove 19 is located a radially outwardly extending projection 15 of the release element 14 such that axial movement of the release element 14 is constrained by the stop surfaces 25 and 26.

The release element 14 is made from brass and includes a tapered end surface 27 capable of engaging the gripping ring 10 to urge it out of engagement with the tube 22. Engagement of the tapered surface 27 with the gripping ring 10 is within the range of axial movement of the release element permitted by the stop surfaces 25 and 26 of the retaining element 12.

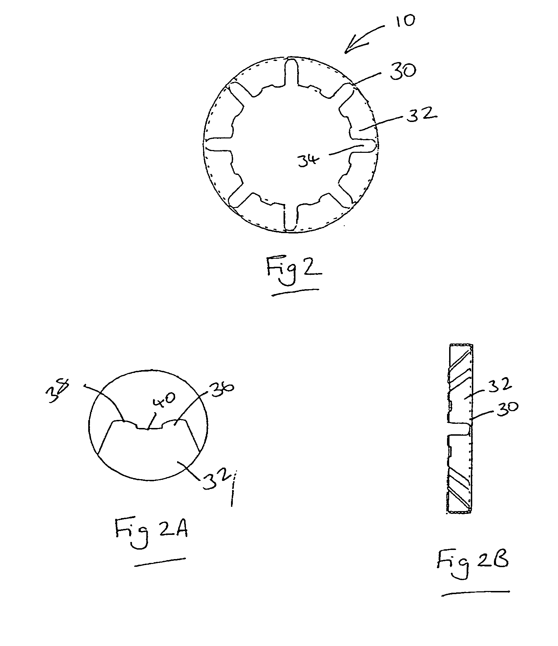

The gripping ring 10, as shown in more detail in Figures 2, 2a and 2b comprises a stainless steel annular portion 30 and extending radially inwardly therefrom a plurality of stainless steel teeth 32. As shown in more detail in Figure 2b, each of the teeth 32 also project out of the plane defined by the annular portion 30. Each tooth 32 includes two outer convex portions 36, 38 separated by an indented central portion 40.

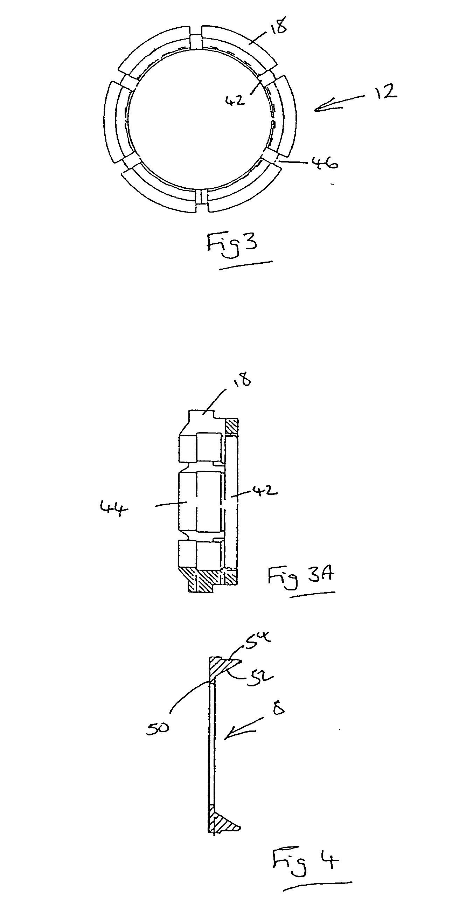

The retaining element 12 (shown in Figures 3 and 3a) includes an annular portion 42 having six equally spaced projections 44 extending axially therefrom, with each of the projections 44 being separated from its neighbouring projections by gaps 46. Each projection 44 includes a radially outwardly projecting flange 18. The gaps 46 between the projections 44 permit limited radially inward movement of the resilient projections so that the flange 18 can enter the enlarged end region 5 of the tube receiving bore before it snap-fits into the groove 20 of the body 4.

Although in the specific embodiments described herein, the retaining element is not releasable from the tube coupling once it has been snap-fitted into position, other embodiments within the scope of the present invention may include a retaining element which is releasably retained within the coupling. Thus, the limited flexibility of the projections may also allow removal of the retaining element from the tube coupling by urging radially inwards the projections until the flange is out of engagement with the groove and the retaining element could then be withdrawn through the enlarged end region 5 of the tube receiving bore.

Once located in position, the retaining element 12 acts as a stop for the gripping ring 10. Thus, any forces exerted to the tube to withdraw it are transmitted to the gripping ring 10 and withdrawal of the gripping ring 10 is prevented by the retaining element 12. The resistive force exerted by the retaining element 12 is transmitted to the tube via the gripping ring 10 and prevents the tube being withdrawn.

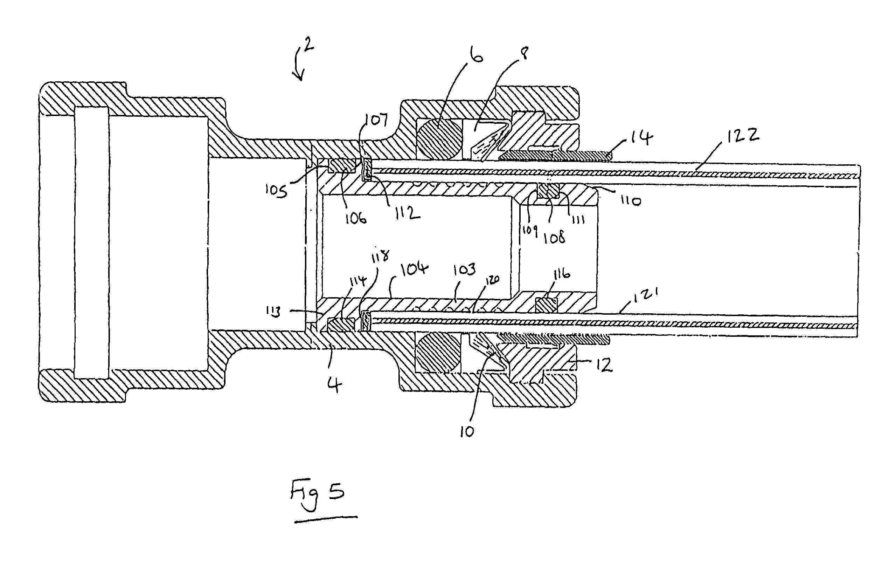

The stiffening element 8 which is made from acetal is shown in more detail in Figure 4 and comprises a planar ring portion 50 having extending axially therefrom a portion providing a frusto-conical tapering surface 52 which when assembled within the body 4 faces the gripping ring 10. The stiffening element 8, together with the body 4 defines an annular channel between the inwardly facing surface of the body 4 and an outwardly facing surface 54 of the stiffening element. When assembled, the annular portion 30 of the gripping ring 10 is located within the annular channel defined by the body and surface 54. Since the annular portion 30 of the gripping ring 10 fits tightly within the channel defined by the body 4 and the surface 54 of the stiffening element, the teeth 32 of the gripping ring 10 are restricted in their ability to move to a small range of pivotal movement about a hinge portion 31 of the gripping ring 10 between the ring portion 30 and the teeth 32. This pivotal movement is constrained between the frusto-conical surface 52 of the stiffening element 8 and a corresponding frusto-conical surface 45 of the retaining element 12.

In use, the tube 22 is pushed into the coupling, passing into a tube receiving bore 7. The tube urges the teeth 32 of the gripping ring 10 towards the frusto-conical surface 52 of the stiffening element 8 such that the tube may continue to pass the teeth 32 of the gripping ring 10. The tube also engages the O-ring seal 6 in a sealing manner. The tube is pushed in until it encounters a stop 9 in the body 4.

The resilience of the teeth 32 of the gripping ring 10 are such that the teeth dig into the outer surface of the tube to a certain extent. This resists any outward force on the tube 22 and prevents the tube being removed from the coupling.

Figure 5 shows a slightly alternative arrangement of the coupling which is modified to accept a more flexible multi-layered pipe. The tube coupling shown in Figure 5 is substantially identical to the tube coupling shown in Figure 1, but with the additional components described below.

Prior to a multi-layered pipe 122 being inserted into the coupling 2, a brass insert 104 is inserted into the free end of the tube 122. The insert 104 comprises a generally tubular body 103 having a tapered end portion 110 at one end and a radially outwardly extending flange portion 113 at the other end. There is a channel 114 provided in the flange 113 arranged to receive an O-ring seal 106. The channel 114 includes stop surfaces 105 and 107 to prevent axial movement of the O-ring seal 106. Abutting a surface 118 of the flange 113 is a PTFE insulating washer 112. The internal diameter of the insulating washer 112 is configured to be a tight fit around the outwardly facing surface of the insert body 103. Towards the tapered end portion of the insert is provided a second O-ring seal 108 housed within a channel 116 including a pair of stop surfaces 109 and 111, the channel 116 being sized such that the stop surfaces 109 and 111 restrain the O-ring seal 108 against axial movement.

The tapered portion 110 of the insert allows for easy insertion into the free end of the tube 122 and the insert is inserted into the tube until the end surface of the tube 122 engages the insulating washer 112. When in this position, the O-ring seal 108 is in sealing engagement with the tube 122. The flange 113 of the insert 104 is arranged such that the outer diameter of the flange 113 is substantially identical to the outer diameter of the tube 122.

The insert is sized such that it is a tight fit within the tube 122. That is to say an outwardly facing surface 120 of the insert body 103 engages an inwardly facing surface 121 of the tube 122 in such a way as to prevent the tube walls moving radially inwards.

The tube 122, together with the inserted insert 104 is then pushed into the coupling 2 in the same way as described above for the copper tube with respect to the first embodiment of the present invention. The insert 104 prevents radially inward movement of the tube 122 in the area where the teeth 32 of the gripping ring 10 engage the tube 122. Thus, the insert permits the teeth 32 of the gripping 10 to engage the tube 122 by digging into its outer surface and thereby prevent undesired removal of the tube 122 from the coupling 2.

Once inserted into the tube coupling 2, the O-ring seal 106 engages an inwardly facing surface of the body 4 in a sealing manner, to provide a fluid seal within the coupling 2 in addition to the O-ring seal 6.

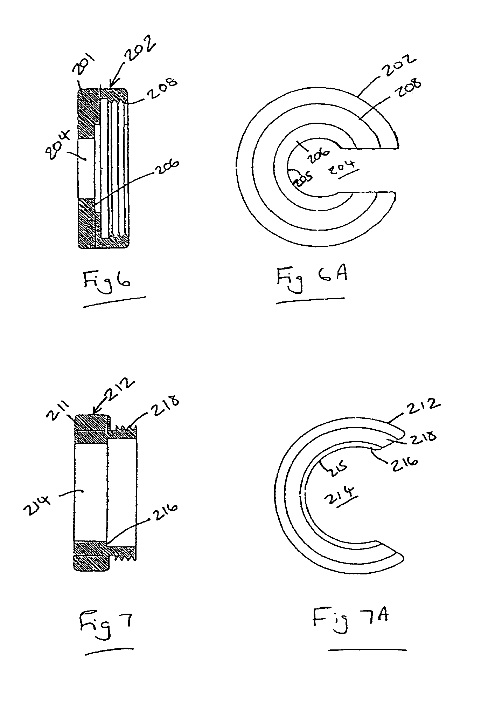

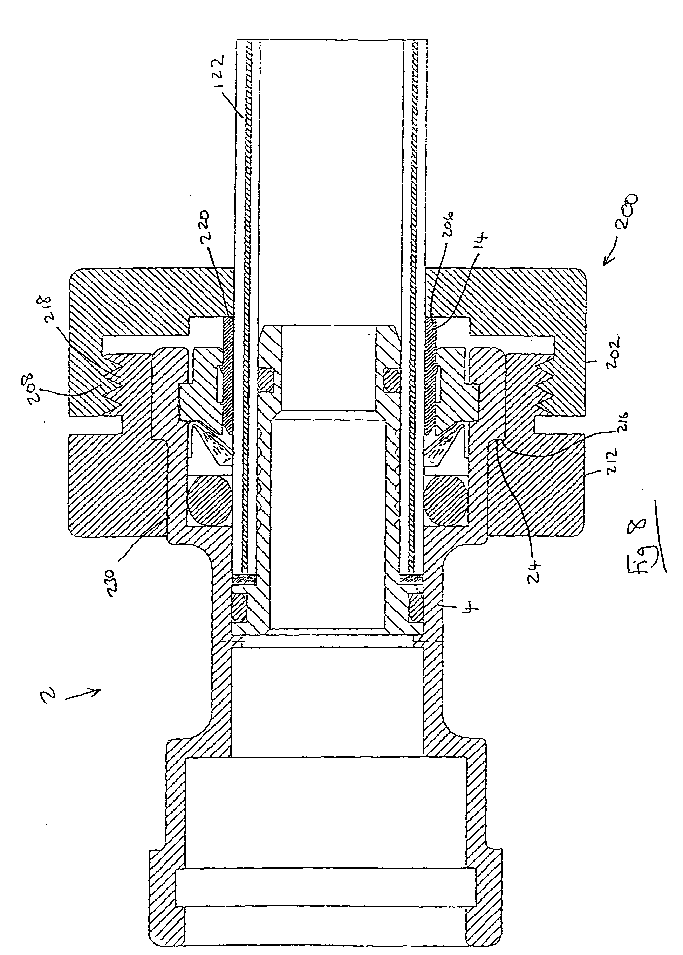

Figures 6 and 6a show the first member 202 of a two-part release tool 200 and Figures 7 and 7a show the second member 212 of the two-part release tool 200. Figure 8 shows the two members 202, 212 of the release tool 200 engaged one with the other located in position on the tube coupling 2 as described above.

The first member 202 of the release tool 200 consists of a generally cylindrical body 201 having a slot 204 therein. The width of the slot 204 being slightly smaller than the diameter of the tube 122 about which it may be placed so that the first member 202 snap fits about the tube. The slot 204 ends in a curved portion 205, arranged such that the curved portion 205 has a radius about the axis of the body 201 which is just slightly greater than the radius of the tube 122 about its axis. This arrangement allows for the first release member 202 to be located coaxially about the tube 122.

The body 201 further includes a substantially planar annular contact surface 206 and an internal threaded portion 208.

The second member 212 of the release tool 200 consists of a substantially C-shaped body 211 defining a channel 214. The body 211 has a degree of flexibility which allows it to snap-fit over a portion 230 of the coupling 2, the channel 214 being sized to receive this portion 230 of the tube coupling 2.

The second release member 212 further includes an engagement surface 216 and a radially outwardly projecting threaded portion 218.

Attachment of the release tool 200 to the tube coupling 2 is shown in Figure 8 and described below.

The second release tool member 212 snap fits over the portion 230 of the tube coupling 2 such that the engagement surface 216 of the second release tool member 212 engages the stop surface 24 of the coupling body 4. The first release tool member 202 is then arranged coaxially with the tube 122 and moved axially towards the second release tool member 212 until the threaded portion 208 of the first member 202 contacts the complimentary threaded portion 218 of the second member 212. The second release tool member 212 is then held stationery while the first release tool member is rotated in a clockwise sense relative to it such that the threaded portion 208 threadedly engages the threaded portion 218 and a portion of the contact surface 206 of the first release tool member 202 engages an end surface 220 of the release element 14. Continued rotation of the first release tool member 202 with respect to the second release tool member 212 urges the release element 14 into engagement with the teeth 32 of the gripping ring 10, the tapered end surface of the release element 14 urging the teeth 32 out of gripping engagement with the outer surface of the tube 122, thus permitting removal of the tube 122 from the coupling 2.
These preferred embodiments have been described by way of an example and it will be apparent to those skilled in the art that many alterations can be made that are still within the scope of the invention.

## Claims

1. A tube coupling apparatus (2) including a body (4) which defines a tube receiving bore, the tube receiving bore being provided with a sealing element (6); a tube gripping means (10); a release element (14) axially slidable within the bore, the release element being engageable with the tube gripping means (10) so as to urge the tube gripping means (10) out of gripping engagement with the tube (22, 122); wherein the apparatus further includes a retaining element (12) held, at least partially, within the bore, said retaining element (12) retaining the sealing element (16) and the tube gripping means (10) within the bore and restricting axial movement of the tube gripping means (10) within the bore; wherein the retaining element (12) cooperates with the release element (14) so that the retaining element (12) restricts axial movement of the release element (14) within the bore both in a direction towards the tube gripping means and in a direction away from the tube gripping means, **characterised in that** said co-operation occurs within the bore.

2. A tube coupling apparatus according to claim 1, wherein at least a portion of the release element (14) is held within the bore by the retaining element (12).

3. A tube coupling apparatus according to either of claims 1 or 2, wherein, when the tube (22, 122) is inserted in the coupling, at least a portion of the release element (14) is held between the retaining element (12) and the tube (22, 122).

4. A tube coupling apparatus according to claim 1, wherein the retaining element (12) is provided with an annular slot (19) having opposed stop surfaces (25, 26) and in that the release element (14) is provided with a protrusion (15) which is located within the slot such that axial movement of the release element is restricted by contact between the protrusion and the opposed stop surfaces.

5. A tube coupling apparatus according to any one of the preceding claims wherein the release element (14) includes a projecting portion which extends axially outside the body (14), the release element being capable of being moved by an external force applied to the axially projecting portion so that the release element is brought into engagement with the tube gripping means (10) thereby urging tube engaging teeth (32) of the tube gripping means out of gripping engagement with the tube (22, 122).

6. A tube coupling apparatus according to any one of the preceding claims, wherein the retaining element (12) is held within the bore by mechanically interlocking means (18, 20).

7. A tube coupling apparatus according to any one of claims 1 to 6, wherein the retaining element snap-fits within the bore.

8. A tube coupling apparatus according to claim 4, wherein at least a portion of the retaining element snap-fits into a radially outwardly extending groove or channel in the body, thereby acting as a stop for the tube gripping means so as to prevent axial movement of the gripping means and therefore also the tube, when retained within the coupling, towards the open end of the bore, thereby preventing withdrawal of the tube from the coupling.

9. A tube coupling apparatus according to any one of the preceding claims, wherein the apparatus further includes a stiffening element (8) which engages a portion of the tube gripping means rendering the tube gripping means stiffer and increasing the gripping force exerted by tube engaging teeth of the tube gripping means against the tube, when the tube is in its inserted position within the coupling.

10. A tube coupling apparatus according to claim 9, wherein the stiffening element (8) engages a portion of the tube gripping means so as to oppose radially inward movement of that portion, rendering the tube gripping means stiffer.

11. A tube coupling apparatus according to either of claims 9 or 10, wherein the stiffening element (8), in preventing radially inward movement of a portion of the tube gripping means, retains the tube gripping means in a central position with respect to the tube receiving bore so as to make insertion of a tube into the coupling easier.

12. A tube coupling apparatus according to any one of claims 9 to 11, wherein the stiffening element (8)is located between the sealing element (6) and tube gripping means (10), so as to protect the sealing element from being damaged by the tube gripping means.

13. A tube coupling apparatus according to any one of the preceding claims, wherein the gripping means (10) consists of a gripping ring which includes an axially extending ring portion (30), a plurality of teeth (32) and a hinge portion, located between the ring portion and the teeth, so as to permit pivotal movement of the teeth relative to the ring portion.

14. A tube coupling apparatus according to claim 13, wherein the stiffening element engages the axially extending ring portion so as to urge the ring portion against the inner wall of the bore.

15. A tube coupling apparatus according to claim 14, wherein the stiffening element (8) includes a tapered surface (52) which restricts the pivotal movement of teeth.

16. A tube coupling apparatus according to claim 15, wherein the retaining element (12) includes a tapered surface which together with the tapered surface (52) of the stiffening element restrict the range of pivotal movement of the teeth.

17. A tube release apparatus (200) for use with a tube coupling apparatus (2) having a release element, the tube release apparatus including a first release member (202) including a contact surface (206) for engagement with the release element (14) of the tube coupling apparatus and a second release member (212) engageable with the body (4) of the tube coupling apparatus (2), both the first and second release members including a respective threaded portion (208, 218) so as to be capable of threaded engagement with each other, whereby when in threaded engagement, rotation of one of the release members with respect to the other of the release members in a predetermined direction or sense is capable of causing the contact surface (206) of the first release member to engage the release element (14) of the tube coupling apparatus thereby urging the release element to engage the tube gripping means (10) so as to urge the tube gripping means out of gripping engagement with the tube, wherein the first release member (202) includes a generally annular portion and a slot for receiving the tube radially so that the first release member can be located coaxially with the tube by passing the tube through the slot.

18. A tube release apparatus according to claim 17, wherein the second release member includes a substantially C-shaped body (211) defining a channel (214) so that it is capable of being located coaxially with the bore of the tube coupling apparatus.

19. A tube release apparatus according to claim 17, wherein the second release member includes a radially inwardly extending flange which is engageable with a complimentary shaped and sized radially outwardly extending flange provided on the body of the tube coupling apparatus so as to be capable of preventing axial movement of the second release member towards the open end of the tube receiving bore upon operation of the tube release apparatus.

20. Apparatus including a tube release apparatus according to any one of claims 17 to 19 and a tube coupling apparatus according to any one of claims 1 to 16.

21. A method of releasing a tube from a tube coupling apparatus according to any one of claims 1 to 16 using as tube release apparatus according to any one of claims 17 to 20, the method including locating the first release member coaxially with the tube, locating the second release member coaxially with the bore of the tube coupling apparatus, threadedly engaging the first release member with the second release member, rotating one of the release members with respect to the other release member until the contact surface or the first release member engages the release element of the tube coupling apparatus, continuing to rotate one of the release members with respect to the other release member, thereby causing the release element to engage the tube gripping means so that the tube gripping means is urged out of gripping engagement with the tube, thereby releasing the tube so that it can be removed from the tube coupling apparatus.

22. A method of releasing a tube from a tube coupling apparatus according to claim 21 wherein, before being brought into threaded engagement with one another to release the tube from the tube coupling apparatus, the first and second release members are separate from one another.

23. A method of releasing a tube from a tube coupling apparatus according to claim 22 wherein, the first and second release members are connected together to maintain the two members as a connected pair when they are not in threaded engagement with one another.

24. Use of a tube coupling apparatus as described in any one of claims 1 to 16 to connect the end of a heating pipe to a radiator.

25. Use of a tube coupling apparatus as described in any one of claims 1 to 16 to connect the end of one heating pipe to the ends of two further heating pipes in a substantially 'T' shaped configuration.

26. Use of a tube coupling apparatus as described in any one of claims 1 to 16 to connect the end of a heating pipe to the end of a further heating pipe in a substantially 'L' shaped configuration.

## Patentansprüche

1. Rohrmuffenvorrichtung (2), umfassend einen Körper (4), der eine Rohraufnahmeöffnung definiert, welche Rohraufnahmeöffnung mit einem Dichtungselement (6) ausgestattet ist; ein Rohrgreifmittel (10); ein Löseelement (14), das innerhalb der Öffnung axial gleitbar ist, welches Löseelement mit dem Rohrgreifmittel (10) in Eingriff bringbar ist, um das Rohrgreifmittel (10) aus dem Greifeingriff mit dem Rohr (22, 122) zu lösen; worin die Vorrichtung weiters ein Halteelement (12) aufweist, das zumindest teilweise in der Öffnung gehalten ist, welches Halteelement (12) das Dichtungselement (16) und das Rohrgreifmittel (10) innerhalb der Öffnung festhält und eine axiale Bewegung des Rohrgreifmittels (10) in der Öffnung einschränkt; worin das Halteelement (12) mit dem Löseelement (14) zusammenwirkt, sodass das Halteelement (12) die axiale Bewegung des Löseelements (14) in der Öffnung sowohl in eine zum Rohrgreifmittel hin als auch vom Rohrgreifmittel weg führende Richtung einschränkt, **dadurch gekennzeichnet, dass** dieses Zusammenwirken innerhalb der Öffnung stattfindet.

2. Rohrmuffenvorrichtung nach Anspruch 1, worin zumindest ein Abschnitt des Löseelements (14) vom Halteelement (12) innerhalb der Öffnung gehalten ist.

3. Rohrmuffenvorrichtung nach Anspruch 1 oder 2, worin zumindest ein Abschnitt des Löseelements (14) zwischen dem Halteelement (12) und dem Rohr (22, 122) gehalten ist, wenn das Rohr (22, 122) in die Muffe eingeführt ist.

4. Rohrmuffenvorrichtung nach Anspruch 1, worin das Halteelement (12) mit einem ringförmigen Schlitz (19) mit einander gegenüberliegenden Anschlagflächen (25, 26) versehen ist und worin das Löseelement (14) mit einem Vorsprung (15) versehen ist, der im Schlitz angeordnet ist, sodass die axiale Bewegung des Löseelements durch die Berührung zwischen dem Vorsprung und den einander gegenüberliegenden Anschlagflächen eingeschränkt ist.

5. Rohrmuffenvorrichtung nach einem der vorangegangenen Ansprüche, worin das Löseelement (14) einen vorstehenden Abschnitt umfasst, der sich axial außerhalb des Körpers (14) erstreckt, wobei das Löseelement imstande ist, durch eine an den axial vorstehenden Abschnitt angelegte, externe Kraft bewegt zu werden, sodass das Löseelement (14) mit dem Rohrgreifmittel (10) in Eingriff gebracht wird und **dadurch** die Rohreingriffszähne (32) des Rohrgreifmittels (10) aus dem Greifeingriff mit dem Rohr (22, 122) gelöst werden.

6. Rohrmuffenvorrichtung nach einem der vorangegangenen Ansprüche, worin das Halteelement (12) durch mechanische Verriegelungsmittel (18, 20) im inneren der Öffnung gehalten ist.

7. Rohrmuffenvorrichtung nach einem der Ansprüche 1 bis 6, worin das Halteelement durch eine Schnappverbindung in der Öffnung eingepasst ist.

8. Rohrmuffenvorrichtung nach Anspruch 4, worin zumindest ein Teil des Halteelements durch eine Schnappverbindung in eine sich radial nach außen erstreckende Nut oder Rille im Körper eingepasst ist und **dadurch** als Anschlag für das Rohrgreifmittel dient, um die axiale Bewegung des Greifmittels und somit auch des Rohrs, wenn dieses in der Muffe gehalten ist, zum offenen Ende der Öffnung hin zu verhindern, wodurch die Entnahme des Rohrs aus der Muffe verhindert wird.

9. Rohrmuffenvorrichtung nach einem der vorangegangenen Ansprüche, worin die Vorrichtung weiters ein Versteifungselement (8) umfasst, das in einen Abschnitt des Rohrgreifmittels eingreift, das Rohrgreifmittel steifer macht und die Greifkraft, die durch die Rohreingriffszähne des Rohrgreifmittels auf das Rohr ausgeübt wird, verstärkt, wenn das Rohr seine eingeführte Position in der Muffe einnimmt.

10. Rohrmuffenvorrichtung nach Anspruch 9, worin das Versteifungselement (8) in einen Abschnitt des Rohrgreifmittels eingreift, um einer radial nach innen gerichteten Bewegung dieses Abschnitts entgegenzuwirken, wodurch das Rohrgreifmittel steifer wird.

11. Rohrmuffenvorrichtung nach Anspruch 9 oder 10, worin das Versteifungselement (8) bei der Verhinderung der radial nach innen gerichteten Bewegung eines Abschnitts des Rohrgreifmittels das Rohrgreifmittel in einer mittigen Position in Bezug auf die Rohraufnahmeöffnung hält, um die Einführung eines Rohrs in die Muffe zu erleichtern.

12. Rohrmuffenvorrichtung nach einem der Ansprüche 9 bis 11, worin das Versteifungselement (8) zwischen dem Dichtungselement (6) und dem Rohrgreifmittel (10) angeordnet ist, um das Dichtungselement vor einer Beschädigung durch das Rohrgreifmittel zu schützen.

13. Rohrmuffenvorrichtung nach einem der vorangegangenen Ansprüche, worin das Greifmittel (10) aus einem Greifring besteht, der einen axial verlaufenden Ringabschnitt (30), eine Vielzahl an Zähnen (32) und einen Gelenkabschnitt umfasst, der zwischen dem Greifmittel und den Zähnen angeordnet ist, um eine Schwenkbewegung der Zähne in Bezug auf den Ringabschnitt zuzulassen.

14. Rohrmuffenvorrichtung nach Anspruch 13, worin das Versteifungselement in den axial verlaufenden Ringabschnitt eingreift, um den Ringabschnitt an die Innenwand der Öffnung zu drücken.

15. Rohrmuffenvorrichtung nach Anspruch 14, worin das Versteifungselement (8) eine sich verjüngende Oberfläche (52) umfasst, welche die Schwenkbewegung der Zähne einschränkt.

16. Rohrmuffenvorrichtung nach Anspruch 15, worin das Halteelement (12) eine sich verjüngende Oberfläche umfasst, die gemeinsam mit der sich verjüngenden Oberfläche (52) des Versteifungselements den Schwenkbewegungsbereich der Zähne einschränkt.

17. Rohrlösevorrichtung (200) zur Verwendung mit einer Rohrmuffenvorrichtung (2) mit einem Löseelement, welche Rohrlösevorrichtung ein erstes Löseelement (202), welches eine Kontaktfläche (206) für den Eingriff mit dem Löseelement (14) der Rohrmuffenvorrichtung aufweist, und ein zweites Löseelement (212), das mit dem Körper der Rohrmuffenvorrichtung (2) in Eingriff bringbar ist, umfasst, wobei das erste und das zweite Löseelement jeweils einen Gewindeabschnitt (208, 218) umfassen, um zu einem gegenseitigen Gewindeeingriff fähig zu sein, wodurch - wenn diese im Gewindeeingriff sind - die Drehung von einem der Löseelemente in Bezug auf das andere der Löseelemente, in eine vorbestimmte Richtung oder Drehsinn dazu imstande ist, den Eingriff der Kontaktfläche (206) des ersten Löseelements in das Löseelement (14) der Rohrmuffenvorrichtung zu veranlassen, wodurch das Löseelement zum Eingriff in das Rohrgreifmittel (10) gedrückt wird, um das Rohrgreifmittel aus dem Greifeingriff mit dem Rohr zu drücken, worin das erste Löseelement (202) einen im Allgemeinen ringförmigen Abschnitt und einen Schlitz zur radialen Aufnahme des Rohrs umfasst, sodass das erste Löseelement koaxial zum Rohr angeordnet werden kann, indem das Rohr durch den Schlitz geschoben wird.

18. Rohrlösevorrichtung nach Anspruch 17, worin das zweite Löseelement einen im Wesentlichen C-förmigen Körper (211) umfasst, der einen Kanal (214) definiert, sodass dieses zur koaxialen Anordnung zur Öffnung der Rohrmuffenvorrichtung imstande ist.

19. Rohrlösevorrichtung nach Anspruch 17, worin das zweite Löseelement einen sich radial nach innen erstreckenden Flansch aufweist, der mit einem komplementäre Form und Größe aufweisenden, sich radial nach außen erstreckenden Flansch, welcher am Körper der Rohrmuffenvorrichtung bereitgestellt ist, in Eingriff bringbar ist, um die axiale Bewegung des zweiten Löseelements zum offenen Ende der Rohraufnahmeöffnung hin zu verhindern, nachdem die Rohrlösevorrichtung betätigt wurde.

20. Vorrichtung, umfassend eine Rohrlösevorrichtung nach einem der Ansprüche 17 bis 19 und eine Rohrmuffenvorrichtung nach einem der Ansprüche 1 bis 16.

21. Verfahren zum Lösen eines Rohrs aus einer Rohrmuffenvorrichtung nach einem der Ansprüche 1 bis 16 unter Verwendung einer Rohrlösevorrichtung nach einem der Ansprüche 17 bis 20, wobei das Verfahren das koaxiale Anordnen des ersten Löseelements zum Rohr, das koaxiale Anordnen des zweiten Löseelements zur Öffnung der Rohrmuffenvorrichtung, das Herbeiführen des Gewindeeingriffs des ersten Löseelements mit dem zweiten Löseelement, das Drehen von einem der Löseelemente in Bezug auf das andere Löseelement, bis die Kontaktfläche oder das erste Löseelement in das Löseelement der Rohrmuffenvorrichtung eingreift, und das fortgeführte Drehen von einem der Löseelemente in Bezug auf das andere Löseelement umfasst, wodurch der Eingriff des Löseelements in das Rohrgreifmittel veranlasst wird, sodass das Rohrgreifmittel aus dem Greifeingriff mit dem Rohr gedrückt wird, wodurch das Rohr gelöst wird, sodass dieses aus der Rohrmuffenvorrichtung entnommen werden kann.

22. Verfahren zum Lösen eines Rohrs aus einer Rohrmuffenvorrichtung nach Anspruch 21, worin das erste und das zweite Löseelement voneinander getrennt sind, bevor sie miteinander in Gewindeeingriff gebracht werden, um das Rohr aus der Rohrmuffenvorrichtung zu lösen.

23. Verfahren zum Lösen eines Rohrs aus einer Rohrmuffenvorrichtung nach Anspruch 22, worin das erste und das zweite Löseelement miteinander verbunden sind, um die beiden Elemente als ein verbundenes Paar zu halten, wenn diese nicht miteinander im Gewindeeingriff sind.

24. Verwendung einer Rohrmuffenvorrichtung nach einem der Ansprüche 1 bis 16 zur Verbindung des Endes eines Heizungsrohrs mit einem Heizkörper.

25. Verwendung einer Rohrmuffenvorrichtung nach einem der Ansprüche 1 bis 16 zur Verbindung des Endes eines Heizungsrohrs mit den Enden von zwei weiteren Heizungsrohren in einer im Wesentlichen T-förmigen Konfiguration.

26. Verwendung einer Rohrmuffenvorrichtung nach einem der Ansprüche 1 bis 16 zur Verbindung des Endes eines Heizungsrohrs mit dem Ende eines weiteren Heizungsrohrs in einer im Wesentlichen L-förmigen Konfiguration.

## Revendications

1. Dispositif formant raccord de tuyau (2) comprenant un corps (4) qui définit un perçage de réception de tuyau, le perçage de réception de tuyau présentant un élément d'étanchéité (6); un moyen de préhension de tuyau (10); un élément de libération (14) apte à coulisser axialement dans le perçage, l'élément de libération pouvant être mis en prise avec le moyen de préhension de tuyau (10) de manière à solliciter le moyen de préhension de tuyau (10) hors prise avec le tube (22, 122); où le dispositif comprend en outre un élément de retenue (12) retenu, au moins partiellement, dans le perçage, ledit élément de retenue (12) retenant l'élément d'étanchéité (16) et le moyen de préhension de tuyau (10) dans le perçage et limitant un déplacement axial du moyen de préhension de tuyau (10) dans le perçage; où l'élément de retenue (12) coopère avec l'élément de libération (14) de sorte que l'élément de retenue (12) limite un déplacement axial de l'élément de libération (14) dans le perçage à la fois dans une direction vers le moyen de préhension de tuyau et dans une direction au loin du moyen de préhension de tuyau, **caractérisé en ce que** ladite coopération a lieu dans le perçage.

2. Dispositif formant raccord de tuyau selon la revendication 1, où au moins une portion de l'élément de libération (14) est retenue dans le perçage par l'élément de retenue (12).

3. Dispositif formant raccord de tuyau selon l'une des revendications 1 ou 2 dans lequel, lorsque le tuyau (22, 122) est inséré dans le raccord, au moins une portion de l'élément de libération (14) est retenu entre l'élément de retenue (12) et le tuyau (22, 122).

4. Dispositif formant raccord de tuyau selon la revendication 1, où l'élément de retenue (12) présente une fente annulaire (19) ayant des surfaces d'arrêt opposées (25, 26), et en ce que l'élément de libération (14) présente une saillie (15) qui se situe dans la fente de telle sorte que le déplacement axial de l'élément de libération est limité par le contact entre la saillie et les surfaces d'arrêt opposées.

5. Dispositif formant raccord de tuyau selon l'une des revendications précédentes, où l'élément de libération (14) comprend une portion saillante qui s'étend axialement à l'extérieur du corps (14), l'élément de libération pouvant être déplacé par une force externe appliquée à la portion axialement saillante, de telle sorte que l'élément de libération est amené en prise avec le moyen de préhension de tuyau (10) en sollicitant ainsi les dents (32) de mise en prise avec le tuyau du moyen de préhension du tuyau hors prise avec le tuyau (22, 122).

6. Dispositif formant raccord de tuyau selon l'une des revendications précédentes, où l'élément de retenue (12) est retenu dans le perçage par un moyen d'interverrouillage mécanique (18, 20).

7. Dispositif formant raccord de tuyau selon l'une des revendications 1 à 6, où l'élément de retenue s'enclenche dans le perçage.

8. Dispositif formant raccord de tuyau selon la revendication 4, où au moins une portion de l'élément de retenue s'enclenche dans une rainure ou canal s'étendant radialement vers l'extérieur dans le corps, en agissant ainsi comme une butée d'arrêt pour le moyen de préhension de tuyau de manière à empêcher un déplacement axial du moyen de préhension et donc également du tuyau lorsqu'il est retenu dans le raccord, vers l'extrémité ouverte du perçage, en empêchant ainsi le retrait du tuyau du raccord.

9. Dispositif formant raccord de tuyau selon l'une des revendications précédentes, où le dispositif comprend en outre un élément de raidissement (8) qui vient en prise avec une portion du moyen de préhension de tuyau en rendant le moyen de préhension de tuyau plus rigide et en augmentant la force de préhension exercée par les dents venant en prise avec le tuyau du moyen de préhension de tuyau contre le tuyau, lorsque le tuyau se trouve dans sa position insérée dans le raccord.

10. Dispositif formant raccord de tuyau selon la revendication 9, où l'élément de raidissement (8) vient en prise avec une portion du moyen de préhension de tuyau de manière à s'opposer à un mouvement radialement vers l'intérieur de cette portion, en rendant le moyen de préhension de tuyau plus rigide.

11. Dispositif formant raccord de tuyau selon l'une quelconque des revendications 9 ou 10, où l'élément de raidissement (8), en empêchant un mouvement radialement vers l'intérieur d'une portion du moyen de préhension de tuyau, retient le moyen de préhension de tuyau dans une position centrale par rapport au perçage de réception de tuyau de manière à faciliter l'insertion du tuyau dans le raccord.

12. Dispositif formant raccord de tuyau selon l'une des revendications 9 à 11, où l'élément de raidissement (8) se situe entre l'élément d'étanchéité (6) et le moyen de préhension de tuyau (10) de manière à protéger l'élément d'étanchéité contre un endommagement par le moyen de préhension du tuyau.

13. Dispositif formant raccord de tuyau selon l'une des revendications précédentes, où le moyen de préhension (10) est constitué d'une bague de préhension qui comprend une portion de bague s'étendant axialement (30), plusieurs dents (32) et une portion d'articulation, située entre la portion de bague et les dents de manière à permettre un mouvement de pivotement des dents relativement à la portion d'anneau.

14. Dispositif formant raccord de tuyau selon la revendication 13, où l'élément de raidissement vient en prise avec la portion d'anneau s'étendant axialement de manière à solliciter la portion d'anneau contre la paroi interne du perçage.

15. Dispositif formant raccord de tuyau selon la revendication 14, où l'élément de raidissement (8) comprend une surface diminuée (52) qui limite le mouvement de pivotement des dents.

16. Dispositif formant raccord de tuyau selon la revendication 15, où l'élément avec de retenue (12) comprend une surface diminuée qui, ensemble la surface diminuée (52) de l'élément de raidissement, limitent la plage de mouvement de pivotement des dents.

17. Dispositif de libération de tuyau (200) pour utilisation avec un dispositif formant raccord de tuyau (2) comportant un élément de libération, le dispositif de libération de tuyau comprenant un premier élément de libération (202) incluant une surface de contact (206) destinée à venir en prise avec l'élément de libération (14) du dispositif formant raccord de tuyau et un deuxième élément de libération (212) pouvant être mis en prise avec le corps (4) du dispositif formant raccord de tuyau (2), à la fois le premier et le deuxième élément de libération incluant une portion respective filetée (208, 218) de manière à pouvoir venir en prise de vissage l'un avec l'autre par quoi, lors d'une prise de filetage, la rotation d'un des éléments de libération par rapport à l'autre des éléments de libération dans une direction ou sens prédéterminé est apte à amener la surface de contact (206) du premier élément de libération à venir en prise avec l'élément de libération (14) du dispositif formant raccord de tuyau en sollicitant ainsi l'élément de libération en prise avec le moyen de préhension de tuyau (10) de manière à solliciter le moyen de préhension de tuyau hors prise avec le tube, où le premier élément de libération (202) comprend une portion généralement annulaire et une fente pour recevoir le tuyau radialement de sorte que le premier élément de libération peut se situer coaxialement dans le tuyau en faisant passer le tuyau à travers la fente.

18. Dispositif de libération de tuyau selon la revendication 17, où le deuxième élément de libération comprend un corps (211) sensiblement en forme de C définissant un canal (214) de sorte qu'il peut être localisé coaxialement dans le perçage du dispositif formant raccord de tuyau.

19. Dispositif de libération de tuyau selon la revendication 17, où le deuxième élément de libération comprend une bride s'étendant radialement vers l'intérieur qui peut être mise en prise avec une bride de forme et de taille complémentaires s'étendant radialement vers l'extérieur réalisée sur le corps du dispositif formant raccord de tuyau de manière à pouvoir empêcher un mouvement axial du second élément de libération vers l'extrémité ouverte du perçage de réception de tuyau lors de l'actionnement du dispositif de libération de tuyau.

20. Dispositif comprenant un dispositif de libération de tuyau selon l'une des revendications 17 à 19 et un dispositif formant raccord de tuyau selon l'une des revendications 1 à 16.

21. Procédé de libération d'un tuyau d'un dispositif formant raccord de tuyau selon l'une des revendications 1 à 16 en utilisant le dispositif de libération de tuyau selon l'une des revendications 17 à 20, le procédé comprenant la mise en place du premier élément de libération coaxialement dans le tuyau, la mise en place du deuxième élément de libération coaxialement dans le perçage du dispositif formant raccord de tuyau, en mettant ainsi en prise de vissage le premier élément de libération avec le deuxième élément de libération, la rotation d'un des éléments de libération par rapport à l'autre élément de libération jusqu'à ce que la surface de contact du premier élément de libération vienne en prise avec l'élément de libération du dispositif formant raccord de tuyau, la continuation de la rotation d'un des éléments de libération par rapport à l'autre élément de libération en amenant ainsi l'élément de libération à venir en prise avec le moyen de préhension de tuyau de sorte que le moyen de préhension de tuyau est sollicité hors prise avec le tuyau, en libérant ainsi le tuyau de sorte qu'il peut être retiré du dispositif formant raccord de tuyau.

22. Procédé de libération d'un tuyau d'un dispositif formant raccord de tuyau selon la revendication 21 dans lequel, avant d'être mis en prise de filetage l'un avec l'autre pour libérer le tuyau du dispositif formant raccord de tuyau, les premier et deuxième éléments de libération sont séparés l'un de l'autre.

23. Procédé de libération d'un tuyau d'un dispositif formant raccord de tuyau selon la revendication 22, dans lequel les premier et deuxième éléments de libération sont assemblés pour maintenir les deux éléments comme une paire connectée lorsqu'ils ne sont pas en prise de vissage l'un avec l'autre.

24. Utilisation d'un dispositif formant raccord de tuyau selon l'une des revendications 1 à 16 pour relier l'extrémité d'un tuyau de chauffage à un radiateur.

25. Utilisation d'un dispositif formant raccord de tuyau selon l'une des revendications 1 à 16 pour relier l'extrémité d'un tuyau de chauffage aux extrémités de deux autres tuyaux de chauffage selon une configuration sensiblement en "T".

26. Utilisation d'un dispositif formant raccord de tuyau selon l'une des revendications 1 à 16 pour relier l'extrémité d'un tuyau de chauffage à l'extrémité d'un autre tuyau de chauffage selon une configuration sensiblement en "L".
